# EUROPÄISCHE PATENTSCHRIFT

(11) **EP 3 104 694 B1**
(45) Veröffentlichungstag und Bekanntmachung des Hinweises auf die Patenterteilung: **02.12.2020**
(21) Anmeldenummer: 15712244.1
(22) Anmeldetag: 12.02.2015
(51) Int. Cl.: A01K 29/00, A01K 11/00

(54) **VERFAHREN FÜR DIE ORTUNG VON TIEREN**
METHOD FOR LOCATING ANIMALS
PROCÉDÉ DE LOCALISATION D'ANIMAUX

(30) Priorität: 14.02.2014 AT 1072014
(43) Veröffentlichungstag der Anmeldung: 21.12.2016
(73) Patentinhaber: Smartbow GmbH, 4675 Weibern (AT)
(72) Erfinder: AUER, Wolfgang, 4675 Weibern (AT)
(74) Vertreter: Mannion, Sally Kim
(86) Internationale Anmeldenummer: PCT/AT2015/000022
(87) Internationale Veröffentlichungsnummer: WO 2015/120495

(56) Entgegenhaltungen:
- WO-A1-2008/113556
- WO-A1-2009/135493
- WO-A1-2010/066429

## Beschreibung

Die Erfindung betrifft ein Verfahren für die Ortung von Tieren mit Hilfe von Funkwellen.

Bekannte Anlagen für die Ortung von Objekten, wie beispielsweise Tieren, mit Hilfe von Funkwellen, weisen mehrere Funksender und/oder Funkempfänger auf die sich an bekannten Positionen befinden, sowie jeweils einen Funksender und/oder Funkempfänger an jedem zu ortenden Objekt.

Des Weiteren werden die Sender bzw. Empfänger, welche für die Ortung mittels Funkwellen verwendet werden einfach als "Knoten" bezeichnet. Entsprechend einem häufig angewandten Verfahren wird für das Bestimmen der Position des an dem zu ortenden Tier angebrachten Knotens im ersten Schritt mit Hilfe von Funksignalen gemessen, um welche Länge sich die Abstände der einzelnen Knoten bekannter Position zu dem zu ortenden Knoten voneinander unterscheiden. Beispielsweise wird dazu von dem zu ortenden Knoten aus ein Signal gleichzeitig an alle anderen Knoten abgesandt. Die empfangenden Knoten messen den Zeitpunkt zu welchem dieses Signal bei ihnen ankommt. Die Differenzen zwischen den einzelnen gemessenen Zeitpunkten, jeweils multipliziert mit der Lichtgeschwindigkeit (Signalausbreitungsgeschwindigkeit im betreffenden Medium) ergeben die Abstandsunterschiede der einzelnen Knoten zum sendenden Knoten. Für die weitere Berechnung wird im ersten Schritt davon ausgegangen, dass sich der zu ortende Knoten auf einem Hyperboloid befindet, dessen Achse durch zwei Knoten bekannter Position als Brennpunkte verläuft, wobei der gemessene Abstandsunterschied dieser Knoten zu dem zu ortenden Knoten gleich jener Länge ist, um welche sich - definitionsgemäß - die Distanzen zwischen den beiden Brennpunkten zu jedem auf dem Hyperboloid befindlichen Punkt unterscheiden. Durch Schneiden von mindestens drei derartigen Hyperboloiden wird die mögliche Position des zu ortenden Gerätes auf zwei Punkte eingeschränkt. Die weitere Einschränkung auf einen Punkt kann mit Hilfe eines vierten Hyperboloids erfolgen (sodass also mindestens vier Knoten bekannter Position erforderlich sind) oder indem an Hand von bekannten geometrischen Gegebenheiten ein Punkt ohnedies ausgeschlossen werden kann, beispielsweise weil er sich außerhalb des Stalls innerhalb dessen sich Tiere bewegen können, befindet. (Mit "Hyperboloid" ist in diesem Text eine rotationssymmetrische schalenförmige Fläche gemeint, die als durch Rotation einer Hyperbel um ihre Hauptachse entstanden gedacht werden kann.)

Wenn in einer Abwandlung zu dem beschriebenen Verfahren im ersten Schritt mittels Funkwellen direkt auf die Abstände zwischen dem Knoten an dem zu ortenden Tier zu den einzelnen Knoten bekannter Position geschlossen wird, so sind im zweiten Schritt anstatt der Hyperboloid-Schalen Kugelschalen anzunehmen.

In einer vereinfachenden weiteren Abwandlung des beschriebenen Verfahrens wird mittels Funkwellen nur ein einziger Abstand, nämlich der zwischen einem einzigen Knoten bekannter Position und dem zu ortenden Knoten, gemessen. Das Ergebnis ist dann eben besagter Abstand zwischen den beiden Knoten, oder in dem Fall, dass bekannt ist, dass sich der zu ortende Knoten auf Grund baulicher Gegebenheiten ohnedies nur an einer bekannten Linie befinden kann, die Position die sich aus der Schnittlinie mit der bekannten Linie mit jener Kugel ergibt, deren Radius gleich dem gemessenen Abstand zwischen den beiden Knoten ist und deren Mittelpunkt am Knoten bekannter Position liegt.

Mit Funklokalisierung von Tieren entsprechend den erklärten Prinzipien befassen sich beispielsweise die Schriften AT 506628 A1, US 6122960 A, DE 100 45 469 C2, WO9941723 A1 WO2011153571 A2 und WO2012079107 A2.

Auf Grund von in der Praxis oftmals unvermeidbar vorkommenden erheblichen Messfehlern und Messungenauigkeiten - z.B. wegen Reflexionen von Funkwellen - sind weitere logische Annahmen einzubringen und dementsprechende Auswertungen vorzunehmen, um ein einigermaßen verlässliches Ortungsergebnis erhalten zu können. Neben dem schon erwähnten Ausschließen von Ergebnissen die auf Grund geometrischer Gegebenheiten unmöglich sind, werden vor allem stochastische Methoden herangezogen um auch an Hand der Ergebnisse vorhergegangener Messungen die Vieldeutigkeit des/der jeweils aktuellen Ergebnisse einzuschränken und jenes Messergebnis zu finden, welches mit der geringsten Fehlerwahrscheinlichkeit die Wirklichkeit wiederspiegelt. Ein bewährtes stochastisches Modell ist in diesem Zusammenhang das Hidden-Markov-Model und dabei insbesondere der Viterbi-Algorithmus, mit Hilfe dessen relativ effizient aus einer Vielzahl von möglichen Zustandsfolgen die aktuell jeweils wahrscheinlichste Zustandsfolge gefunden werden kann. Beispielsweise in der EP 1 494 397 A2 ist eine derartige Methode insbesondere für die Anwendung zur Funklokalisierung in Gebäuden - welche auf Grund von vielfach vorkommenden Signalreflexionen besonders schwierig ist - beschrieben.

Die WO2008/113556 A1 befasst sich mit der Echtzeitlokalisierung von mobilen funkfähigen Marken an Tieren, und einer Methode zum Unterscheiden zwischen verschiedenen Aktivitäten jedes markierten Tieres auf der Basis des Ortes in drei Dimensionen der Marke innerhalb einer Überwachungszone.

In den Schriften EP 549081 A1, GB 2234070 A, GB 2278198 A, US 3999611 A, US 6122960 A, US 7616124 B2, WO 2002091001 A1, WO 2003055388 A2, WO 2006077589 A2, WO 2010108496 A1 und WO 2010109313 A1 wird vorgeschlagen und erläutert Beschleunigungssensoren (unter anderem) an lebendigen Tieren anzubringen und aus den Messergebnissen der Beschleunigungssensoren auf das Verhalten der Tiere zurückzuschließen welches zu den jeweiligen Beschleunigungen führt. Üblicherweise werden dazu die Messergebnisse über eine Funkverbindung an eine Datenverarbeitungsanlage übertragen und durch diese auf Übereinstimmungen mit als Muster gespeicherten zeitlichen Verläufen von Beschleunigungsdaten überprüft.

Die als Muster gespeicherten zeitlichen Verläufe sind dabei charakteristisch für bestimmte Aktivitäten des Tieres wie beispielsweise Gehen, Fressen, Wiederkäuen, Schlafen, ggf. hinkendes Gehen, Aufreiten auf andere Tiere. Für das Finden der charakteristischen Muster wurden in früheren Arbeiten Beschleunigungsdaten und parallel dazu die an Hand von unmittelbarer Beobachtung festgestellten Aktivitäten von Tieren aufgezeichnet und aus den aufgezeichneten Daten Korrelationen zwischen Beschleunigungsmustern und Aktivitäten herausgefiltert.

Es ist auch möglich, die Auswertung von Beschleunigungsmessdaten ganz oder teilweise schon in einer Datenverarbeitungsanlage durchzuführen, welche sich an jenem Gerät befindet, welches sich am Tier befindet und den oder die Beschleunigungssensoren beinhaltet.

Die WO9941723 A1 befasst sich mit einem von einem Menschen oder Tier mitgeführten Gerät, welches Funkwellen senden und empfangen kann und dessen Position durch ein Satellitennavigationssystem feststellbar ist. Es wird auch erwähnt, dass das Gerät neben verschiedenen anderen Sensoren die beispielsweise einen biologischen Zustand messen können, auch einen Beschleunigungssensor aufweisen kann.

Die WO2011153571 A2, WO2012079107 A2, WO 2010066429 A1 und die WO 2009135493 A1 befassen sich mit funkfähigen Ohrmarken für Tiere, wobei eine Ohrmarke sowohl Funkortung ermöglicht als auch einen Beschleunigungssensor enthalten kann, mit Hilfe dessen durch Musterauswertung Aktivitäten des Tieres automatisch erkennbar sind.

Die US 6122960 A befasst sich vorwiegend mit der Messung und Aufzeichnung von Bewegungen und zurückgelegten Entfernungen von Menschen oder Tieren durch Messung von Beschleunigungen und Auswertung der Messungen. Es wird vorgeschlagen ergänzend eine "Absolutposition" durch Funknavigation festzustellen.

Von diesem Stand der Technik ausgehend liegt die Aufgabe an die Erfindung darin, ein in Laufställen und Koppeln für Tiere anwendbares automatisch ablaufendes Verfahren nach Anspruch 1 für die Ortung von Tieren mit Hilfe von Funkwellen bereitzustellen, welches gegenüber bekannten derartigen Verfahren bezogen auf den dafür erforderlichen Investitionsaufwand genauere und besser verlässliche Ergebnisse liefert.

Zum Lösen der Aufgabe wird vorgeschlagen Funkortung und Analyse der Daten von zumindest einem Beschleunigungssensor auf die folgende neuartige Weise zu kombinieren:
Aus den Daten des Beschleunigungssensors wird darauf geschlossen, ob sich das betreffende Tier in aufrechter (stehender, gehender oder laufender) Position oder in liegender Position befindet. In Abhängigkeit von dieser Entscheidung wird darauf geschlossen, wie hoch sich ein am Tier angeordneter Knoten, welcher der Funkordnung dient, über dem Boden befindet. Die Information über die Höhenposition des zu ortenden Knotens lässt man als Randbedingung in jene im Zuge der Funkortung durchzuführenden Berechnung einfließen, gemäß welcher die Position des zu ortenden Knotens aus den Ergebnissen von einer oder mehreren Distanzmessungen bzw. Distanzunterschiedsmessungen zwischen dem am Tier angebrachten Knoten und einem bzw. mehreren Knoten mit bekannter Position errechnet wird.

Schon durch die Annahme der Randbedingung, dass sich der zu ortende Knoten in einer bestimmten Fläche befindet, wird die bei Funkortung erforderliche Berechnung zur Auffindung der Koordinaten des Ortes an dem sich dieser Knoten befindet, gegenüber einer Situation ohne derartige Randbedingung stark vereinfacht. Man findet mit einem Knoten bekannter Lage weniger das Auslangen. Indem man zufolge der Ergebnisse der Auswertung der Beschleunigungsmessungen noch klar festlegen kann, in welcher von zwei unterschiedlichen klar definierten Flächen der zu ortende Knoten liegen muss, kann man natürlich deutlich bessere Genauigkeit erreichen, als wenn man statt dessen mit nur einer mittleren "Durchschnittsfläche" rechnen würde und dabei nicht wissen würde ob der zu ortende Knoten tatsächlich etwas darüber oder darunter liegt. Ganz wesentliche Vorteile der erfindungsgemäßen Methode ergeben sich dann, wenn sich in dem Bereich in welchem der zu ortende Knoten sein kann, abschattende Objekte wie Mauern oder andere Tiere befinden. Bei der erfindungsgemäßen Methode kann dann durch das Wissen in welcher Höhe sich der zu ortende Knoten befindet, sehr gut zutreffend selektiv gesagt werden, ob dieser Knoten von direktem Sichtkontakt zu bestimmten Knoten bekannter Position abgeschattet ist oder nicht. Damit kann in weiterer Folge sehr gut zutreffend selektiv gesagt werden ob die Ergebnisse des jeweiligen Knotens bekannter Position in eine Berechnung miteinbezogen werden können oder nicht.

Die Erfindung wird an Hand von Prinzipskizzen veranschaulicht:
- Fig. 1:: zeigt in Ansicht von oben Schnittlinien eines Hyperboloids, dessen Achse parallel zur X-Achse verläuft mit zwei Ebenen, welche in unterschiedlichen Höhen zur xy-Ebene parallel liegen.
- Fig. 2:: zeigt in Seitenansicht geometrische Verhältnisse in einem beispielhaften Raum in welchem die Erfindung angewandt wird.

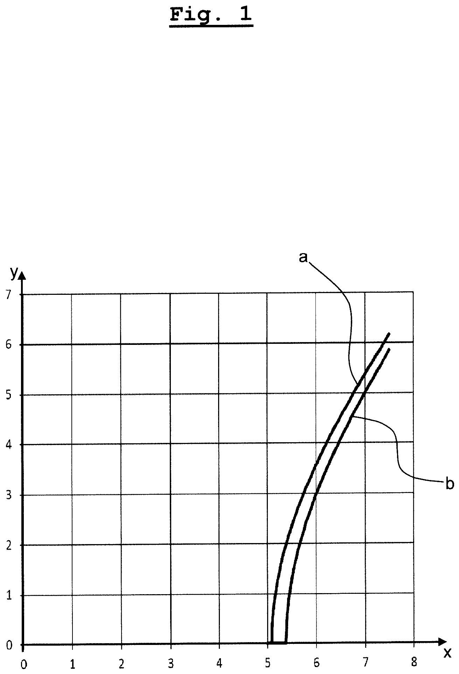

Die Kurven a, b von Fig. 1 sind jeweils ein Abschnitt einer Schnittlinie eines einzigen Hyperboloids mit zwei unterschiedlichen, zur xy-Ebene parallelen Ebenen. Unter der Annahme dass die Längeneinheit ein Meter ist liegen die Brennpunkte des Hyperboloids auf einer zur x-Achse parallelen Gerade 15 Meter voneinander entfernt mit den x-Koordinaten -7,5 und +7,5 und die Differenz der Abstände der beiden Brennpunkte zu jedem Punkten des Hyperboloids beträgt 10 Meter. Die Schnittebene, welche zur Kurve a führt liegt einen Meter unterhalb der Verbindungslinie zwischen den Brennpunkten. Die Schnittebene, welche zur Kurve b führt liegt 2,2 Meter unterhalb der Verbindungslinie zwischen den Brennpunkten.

Die Kurven a, b spiegeln also die idealen Verhältnisse wieder wenn
- in einem Stall an 15 Meter voneinander entfernten Wänden in 2,5 Metern Höhe jeweils ein Knoten eines Funkortungssystems angebracht wird und
- wenn sich in dem Stall Rinder aufbewahren bei denen der zu ortende Knoten eine Ohrmarke ist und sich in 1,5 Metern Höhe befindet wenn ein Rind steht oder geht und sich in 0,3 Metern Höhe befindet wenn sich das Rind hingelegt hat oder vom Boden frisst und
- wenn der Abstand der Ohrmarke eines Rindes zu dem einen Knoten um 10 Meter größer ist als zu dem anderen Knoten und
- wenn beim Funkortungsprinzip ein solches angewendet wird, bei welchem die Unterschiede zwischen den Signallaufzeiten zwischen dem zu ortenden Knoten und den verschiedenen Knoten bekannter Position gemessen werden.

Bezüglich xy-Koordinaten ist der Normalabstand zwischen den beiden Schnittkurven a, b nur etwa 1/3 Meter und damit auf den ersten Blick nicht bedeutend. Man sieht aber doch, dass in der Normalen zur Verbindungslinie zwischen den Brennpunkten des Hyperboloids, also in der Normalen zur Verbindungslinie zwischen den beiden Knoten bekannter Position, der Abstand zwischen den beiden Kurven a, b etwa zwei Meter betragen kann, wenn sich der zu ortende Knoten im Nahbereich der Verbindungslinie zwischen den Knoten bekannter Position befindet.

Durch die erfindungsgemäße Verwendung von einer bestimmten von zwei unterschiedlichen Kurven a, b anstatt einer einzigen "durchschnittlichen Kurve" (welche mittig zwischen den Kurven a, b anzunehmen wäre) wird also die Messgenauigkeit bezüglich der y-Koordinate drastisch verbessert, während die Verbesserung der Messgenauigkeit bezüglich der X-Koordinate (welche parallel zur Verbindungslinie zwischen den Knoten bekannter Position liegt) nur gering ist.

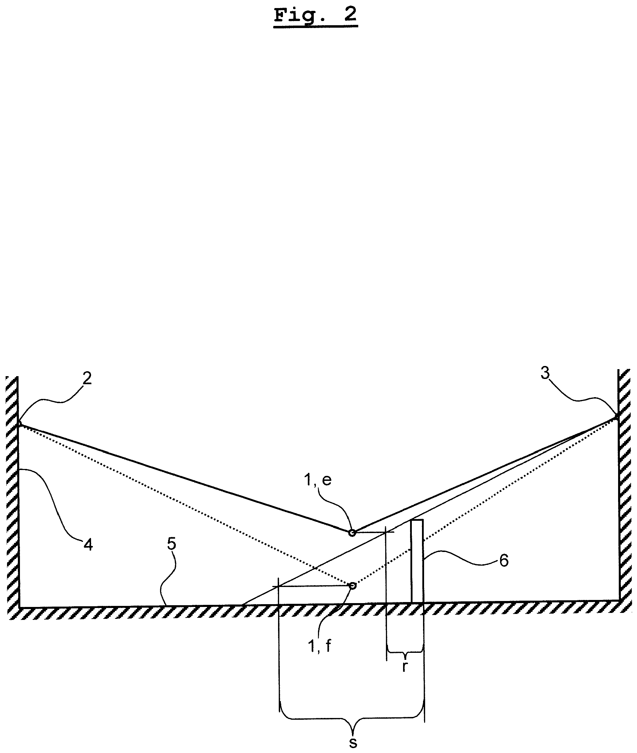

Der vielleicht wesentlichste Vorteil des erfindungsgemäßen Verfahrens wird an Hand von Fig. 2 erklärt.

Tiere, welche zu ortenden Knoten 1, typischerweise in Form einer Ohrmarke tragen, befinden sich in einem Gelände, beispielsweise einem Laufstall, welches durch seitliche Wände 4 und einen Boden 5 definiert ist. An den seitlichen Wänden sind Knoten 2, 3 eines Funkortungssystems in bekannter Position verankert. Auf dem Gelände befindet sich ein Objekt 6, welches manche Volumenbereiche r, s über dem Boden 5 des Geländes gegen den Knoten 3 abschattet, sodass von diesen Volumenbereichen kein direkter Sichtkontakt zu dem Knoten 3 besteht. Das abschattende Objekt kann beispielsweise eine Trennwand, eine Fütterungseinrichtung oder auch ein anderes Tier, dessen Position durch Funkortung bestimmt wurde, sein.

Wie an sich bekannt, wird bei der logischen Auswertung der an sich vieldeutigen Ergebnisse der Funkortung berücksichtigt, ob sich der zu ortende Knoten 1 überhaupt an einem sich aus der Berechnung scheinbar ergebenden Ort befinden kann oder nicht. Weiters werden - sofern die notwendigen Basisinformationen dazu vorliegen - Berechnungsergebnisse in welche Messergebnisse des Knotens 3 miteingeflossen sind, als ungültig ausgeschieden, wenn sie aussagen, dass sich der zu ortende Knoten 1 in einem Volumenbereich s befindet, von dem aus zum Knoten 3 bekannter Position gar kein direkter Sichtkontakt besteht. Die der Berechnung zu Grunde liegende gemessene Signallaufzeit kann dann nämlich nicht die Distanz zwischen den Knoten 1 und 3 in direkter gestreckter Linie wiederspiegeln.

Indem erfindungsgemäß als Randbedingung für die Berechnung der Position schon angenommen wird in welcher Höhe sich der zu ortende Knoten 1 befinden muss, ergeben sich je nach Fall (kleinere oder größere der beiden möglichen Höhen) für die Berechnung deutlich unterschiedliche Volumenbereiche s, r die durch das Objekt 6 vom Knoten 3 abgeschattet sind.

Wenn eine Berechnung aus den Ergebnissen der Funkortung ergibt, dass sich der zu ortende Knoten 1 in einem bezüglich eines Knotens 3 abgeschatteten Volumenbereich s, r befindet, und wenn in diese Berechnung Messwerte des Knotens 3 miteingeflossen sind, so ist das betreffende Berechnungsergebnis für die weitere Auswertung als ungültig, also nicht weiter zu berücksichtigen, einzustufen.

In dem in Fig. 2 dargestellten Beispiel kann also das den Knoten 3 miteinbeziehende Berechnungsergebnis als mögliches Ergebnis weiter behandelt werden, wenn auf Grund der Auswertung der Ergebnisse der Beschleunigungsmessungen bekannt ist, dass sich der zu ortende Knoten 1 in der höheren Position befinden muss, sodass sich der Punkt e als sein errechneter Aufenthaltsort ergibt. Hingegen ist ein Berechnungsergebnis, welches das Messergebnis vom Knoten 3 miteinbezieht bezüglich der weiteren Auswertung als sicherlich ungültig einzustufen, wenn auf Grund der Auswertung der Ergebnisse der Beschleunigungsmessungen bekannt ist, dass sich der zu ortende Knoten 1 in der tieferen Position befinden muss, sodass sich Punkt f als sein errechneter Aufenthaltsort ergeben würde, da der Punkt f in dem vom Konten 3 durch das Objekt 6 abgeschatteten Volumenbereich s liegt.

Das erfindungsgemäße Verfahren ist bei verschiedenartigsten Tieren anwendbar. In der Praxis sind wahrscheinlich die Einsatzfälle an Rindern und an Schweinen am meisten bedeutend. Für jede Tierart und eventuell auch individuell für jedes einzelne Tier ist zu prüfen und für die Berechnungen festzulegen, in welcher Höhe über dem Boden sich der am Tier angeordnete Knoten bei welchen Aktivitäten des Tieres am wahrscheinlichsten befindet. Sofern bei der Beschleunigungsauswertung mehr als zwei unterschiedliche Aktivitäten des Tieres erkennbar sind, können unter Umständen auch mehr als zwei mögliche Höhen definiert werden, wobei jeweils eine andere Höhe einer anderen Aktivität (Stehen, "Sitzen", Liegen, Liegen mit hochgehobenem Kopf, Liegen mit Kopf am Boden...) zugeordnet ist. Als Randbedingung für die Positionsberechnung aus der Funkortung ist dann aus mehr als zwei möglichen Höhen die eine jeweils zutreffende Höhe auszuwählen.

Besonders einfache Berechnungen ergeben sich, wenn der Boden 5 eine ebene Fläche ist und wenn alle Knoten 2, 3 bekannter Position in gleicher Höhe über dem Boden 5 angeordnet sind.

## Patentansprüche

1. Verfahren für die Ortung eines Tieres mit Hilfe von Funkwellen wobei sich das Tier auf einem Boden (5) befindet und mit einem zu ortenden Knoten (1) des Funkortungssystem ausgestattet ist und wobei mindestens ein weiterer Knoten (2, 3) des Funkortungssystems an jeweils einer bekannten Positionen angeordnet ist, wobei Funksignale zwischen dem zu ortenden Knoten (1) und den Knoten (2, 3) mit bekannter Position übertragen werden und wobei aus bei der Signalübertragungen gemessenen Parametern der Abstand zwischen einem oder mehreren Knoten (2, 3) bekannter Position einerseits und dem zu ortenden Knoten (1) andererseits errechnet wird und/oder Unterschiede der Abstände von den einzelnen Knoten (2, 3) bekannter Position zu dem zu ortenden Knoten (1) errechnet werden und wobei aus den Berechnungsergebnissen weiters mögliche Positionen des zu ortenden Knotens (1) errechnet werden und wobei das Tier mit einem oder mehreren Beschleunigungssensoren versehen ist, durch welche Beschleunigungen zufolge Bewegungen des Tieres gemessen werden und aus den diesbezüglichen Messergebnissen durch eine Datenverarbeitungsanlage an Hand von Vergleich mit musterhaften Beschleunigungsverläufen rückgeschlossen wird, welche von mehreren möglichen unterscheidbaren Aktivitäten das Tier jeweils gerade ausführt,
**dadurch gekennzeichnet, dass**
in einer Datenverarbeitungsanlage hinterlegt ist, in welcher Höhe über dem Boden (5) sich am Tier bei welcher Aktivität des Tieres der zu ortenden Knoten (1) befindet, wobei zumindest zwei voneinander unterscheidbaren Aktivitäten unterschiedliche Höhen zugeordnet sind und wobei bei der Berechnung der Position des zu ortenden Knotens (1) aus den Messergebnissen der Signalübertragungen die Annahme der der jeweils aktuellen Aktivität zugeordneten Höhe als Randbedingung mit einfließt.

2. Verfahren nach Anspruch 1, **dadurch gekennzeichnet, dass** der Boden 5 eine ebene Fläche ist und dass alle Knoten (2, 3) bekannter Position in gleicher Höhe über dem Boden 5 angeordnet sind.

3. Verfahren nach Anspruch 1 oder 2, **dadurch gekennzeichnet, dass** in der Datenverarbeitungsanlage hinterlegt ist, welche Volumenbereiche (r, s) über dem Boden (5) gegenüber einem Knoten (3) bekannter Position durch ein Objekt (6) abgeschattet sind, dass Berechnungsergebnisse in welche Messergebnisse des Knotens (3) miteinfließen und welche zu der Aussage führen, dass sich der zu ortende Knoten (1) in einem Volumenbereich (r,s) befindet der durch das Objekt (6) zum Knoten (3) hin abgestattet liegt, als ungültig klassifiziert werden und dass in Abhängigkeit davon welche Höhe des zu ortenden Knotens (1) anzunehmen ist, unterschiedliche Volumenbereiche (r, s) berücksichtigt werden.

## Claims

1. A method for locating an animal with the aid of radio waves, wherein the animal is located on a ground (5) and is equipped with a node (1) of the radio location system that is to be located and wherein at least one further node (2, 3) of the radio location system is each located on one known position, wherein radio signals are transmitted between the node (1) to be located and the nodes (2, 3) with known position and wherein the distance between one or more nodes (2, 3) of known position on the one hand and the node (1) to be located on the other hand is calculated from parameters measured during signal transmissions and/or differences in the distances from the individual nodes (2, 3) of known position to the node (1) to be located are calculated and wherein further possible positions of the node (1) to be located are calculated from the calculation results and wherein the animal is provided with one or more acceleration sensors through which accelerations as a result of movements of the animal are measured and wherein it is inferred from these measurement results by means of a data processing system on the basis of a comparison with exemplary acceleration processes, which of several possible distinguishable activities the animal is currently performing,
**characterized in that**
it is stored in a data processing system, at which height above the ground (5) the node (1) to be located is on the animal at which activity of the animal, wherein at least two activities that can be distinguished from one another are assigned different heights and wherein for the calculation of the position of the node (1) to be located from the measurement results of the signal transmissions, the assumption of the height assigned to the current activity as a boundary condition is included.

2. A method according to claim 1, **characterized in that** the ground 5 is a flat surface and that all nodes (2, 3) of known position are arranged at the same height above the ground 5.

3. A Method according to claim 1 or 2, **characterized**
**in that** it is stored in the data processing system which volume areas (r, s) above the ground (5) are shadowed by an object (6) compared to a node (3) of known position,
**in that** calculation results in which measurement results of the node (3) are included and which lead to the statement that the node (1) to be located is located in a volume area (r, s) that is shadowed to the node (3) by the object (6) are classified as invalid and
**in that** depending on which height of the node to be located (1) is to be assumed, different volume areas (r, s) are taken into account.

## Revendications

1. Procédé de localisation d'un animal à l'aide d'ondes radioélectriques, dans lequel l'animal se trouve sur un sol (5) et est équipé d'un nœud à localiser (1) du système de radiolocalisation et dans lequel au moins un autre nœud (2, 3) du système de radiolocalisation est disposé à une position connue respective, dans lequel des signaux radioélectriques sont transmis entre le nœud à localiser (1) et les nœuds (2, 3) avec une position connue et dans lequel, à partir de paramètres mesurés lors des transmissions de signaux, la distance entre un ou plusieurs nœuds (2, 3) de position connue d'une part et le nœud à localiser (1) d'autre part est calculée et/ou des différences des distances des différents nœuds (2, 3) de position connue au nœud à localiser (1) sont calculées et dans lequel à partir des résultats de calcul d'autres positions possibles du nœud à localiser (1) sont calculées et dans lequel l'animal est pourvu d'un ou de plusieurs capteurs d'accélération par le biais desquels des accélérations suite à des déplacements de l'animal sont mesurées et à partir des résultats de mesure correspondants par le biais d'une installation de traitement de données à l'aide d'une comparaison avec des courbes d'accélération exemplaires, il est déduit laquelle de plusieurs activités différenciables possibles l'animal est respectivement en train de réaliser,
**caractérisé en ce que**
il est déposé dans une installation de traitement de données à quelle hauteur au-dessus du sol (5) se trouve le nœud à localiser (1) sur l'animal lors de quelle activité de l'animal, dans lequel au moins deux activités différenciables l'une de l'autre sont associées à des hauteurs différentes et dans lequel, lors du calcul de la position du nœud à localiser (1) à partir des résultats de mesure des transmissions de signaux, la supposition de la hauteur associée à l'activité actuelle respective est prise en compte en tant que contrainte.

2. Procédé selon la revendication 1, **caractérisé en ce que** le sol (5) est une surface plane et **en ce que** tous les nœuds (2, 3) de position connue sont disposés à la même hauteur au-dessus du sol (5).

3. Procédé selon la revendication 1 ou 2, **caractérisé en ce qu'**il est déposé dans l'installation de traitement de données quelles zones volumiques (r, s) au-dessus du sol (5) par rapport à un nœud (3) de position connue sont cachées par un objet (6), **en ce que** des résultats de calcul, dans lesquels des résultats de mesure du nœud (3) sont pris en compte et qui mènent au renseignement que le nœud à localiser (1) se trouve dans une zone volumique (r, s) qui est située vers le nœud (3), cachée par l'objet (6), sont classés comme non valables, et **en ce que**, en fonction de la hauteur du nœud à localiser (1) à supposer, des zones volumiques (r, s) différentes sont prises en considération.
